# EUROPEAN PATENT APPLICATION

(11) **EP 4 808 106 A1**
(43) Date of publication of application: **16.09.2026**
(21) Application number: 26161119.8
(22) Date of filing: 26.02.2026
(51) Int. Cl.: H04N 5/265, H04N 5/272, H04N 5/275

(54) **A DEVICE, COMPUTER PROGRAM AND METHOD**

(30) Priority: 13.03.2025 GB 202503730
(71) Applicant: Sony Group Corporation, Tokyo 108-0075 (JP)
(72) Inventor: PORTER, Robert Mark Stefan, Basingstoke, RG22 4SB (GB); PRAYLE, Paul Edward, Basingstoke, RG22 4SB (GB); LEATHERS-SMITH, William, Basingstoke, RG22 4SB (GB)
(74) Representative: D Young & Co LLP

(57) **Abstract**

A video switcher is described which comprises an input configured to receive a video stream and processing circuitry configured to: generate a key; determine the position of the key on the input video stream, the position being determined according to a first parameter associated with the video stream; overlay the key on the video stream at the determined position to generate an output video stream; and output the generated output video stream.

## Description

### BACKGROUND

### Field of the Disclosure

The present technique relates to a device, computer program and method.

### Description of the Related Art

The "background" description provided herein is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present technique.

In video editing, it is known to apply a key to a background video. The key is overlaid on the background video and may be a graphic such as a caption naming a presenter of a program or may be a second video feed (a so-called 'picture in picture'). The key may be overlaid onto the background video after editing (i.e. after the video switch) using software. It is also known to overlay the key using the video switcher.

However, overlaying the key using the video switch is time consuming and complicated for the editor.

It is an aim of the disclosure to address this issue.

### SUMMARY

According to embodiments of the disclosure, there is provided a video switcher comprising an input configured to receive a video stream and processing circuitry configured to: generate a key; determine the position of the key on the input video stream, the position being determined according to a first parameter associated with the video stream; overlay the key on the video stream at the determined position to generate an output video stream; and output the generated output video stream.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 shows a schematic diagram of a key being overlaid onto a background video;
Figure 2 shows a typical implementation of a key being overlaid on a frame of a video stream;
Figure 3 shows a system 300 according to embodiments of the disclosure;
Figure 4 shows a video switcher 400 according to embodiments of the disclosure;
Figure 5 shows a table explaining the relationship between a first parameter of the video stream and a position of the key;
Figure 6 shows a user interface according to embodiments;
Figure 7 shows a second graphical user interface;
Figure 8 shows an example of the translation criterion displayed to the user in the second user interface; and
Figure 9 shows a process explaining embodiments of the disclosure carried out on the processing circuitry.

### DESCRIPTION OF THE EMBODIMENTS

Referring now to the drawings, wherein like reference numerals designate identical or corresponding parts throughout the several views.

Numerous modifications and variations of the present disclosure are possible in light of the above teachings. It is therefore to be understood that within the scope of the appended claims, the disclosure may be practiced otherwise than as specifically described herein.

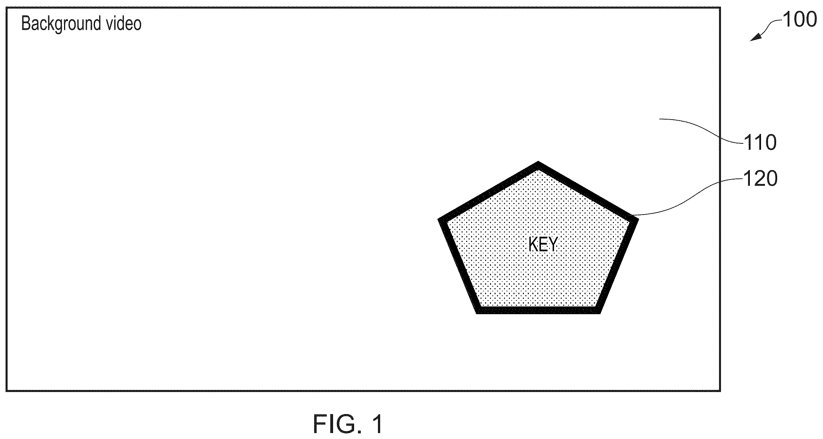

Figure 1 shows a schematic diagram 100 of a key 120 being overlaid onto a background video 110. The background video may, in embodiments, be any kind of video stream such as any live or pre-recorded video stream which may be post or pre-edit. The video stream may be a professional, semi-professional or amateur production.

A key in embodiments means a video element that is overlaid onto a frame of a video stream or may be mixed with a frame of a video stream. The video element may be a second video stream (a so-called Picture in Picture); a still image or part of an image from, for example, a frame of video; a graphic which may be an animation, text and/or captions or other stationary image such as a HTML file or the like.

In embodiments, the key may be in a static position within the video stream. In other words, the key may be in a stationary position within the video stream. In embodiments, the key may move its position over a period of time. The size of the key may be fixed or may vary over time. The resolution of the video element in the key may be the same as or different to that of the background video. The key may be of any shape and may change shape or have the same shape over a period of time. The opacity of the key may be fixed for a period of time or may vary and the key may rotate in embodiments. The key may also comprise a border which may be of any thickness or colour or graphical texture. The border may be static or may change over a period of time.

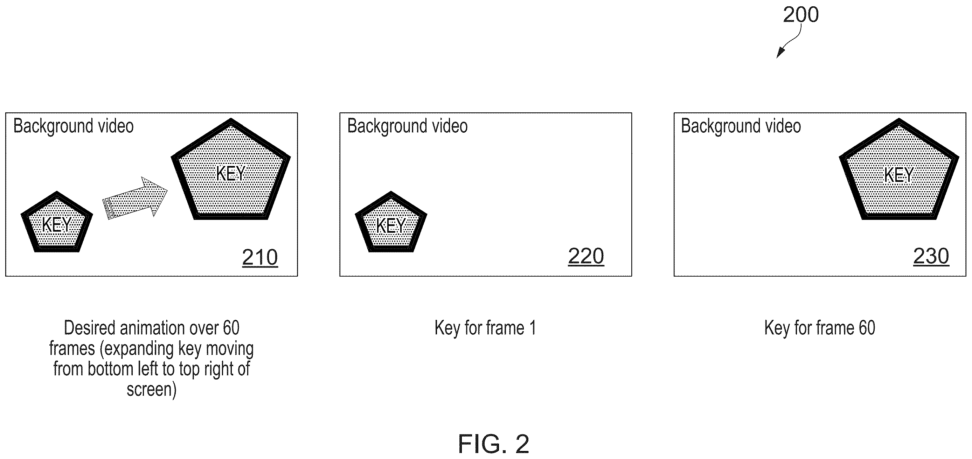

Figure 2 shows a typical implementation 200 of a key being overlaid on a frame of a video stream. In the example of Figure 2, the key starts in the bottom left corner of the video stream and moves to the right and expands in size (scales up) over a time period of 60 frames. This is shown in screen 210. As explained in screen 220, the key is of a certain size and positioned in the bottom left corner of the screen 220. The scale (or size of the key) increases gradually, in embodiments, over the period of 60 frames and transitions to the top right side of screen 230.

As noted above, the overlaying of a key on a frame of a video stream by a video switcher is known. However, this is difficult and complicated for a user. It is an aim of the disclosure to improve this.

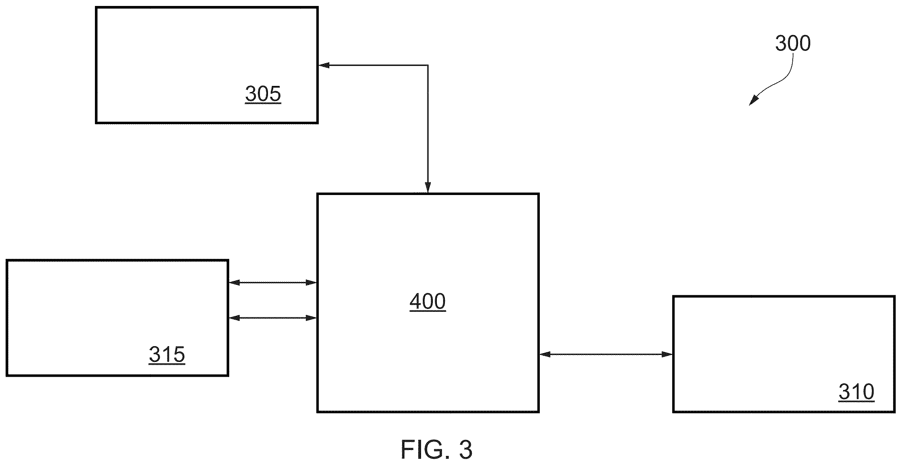

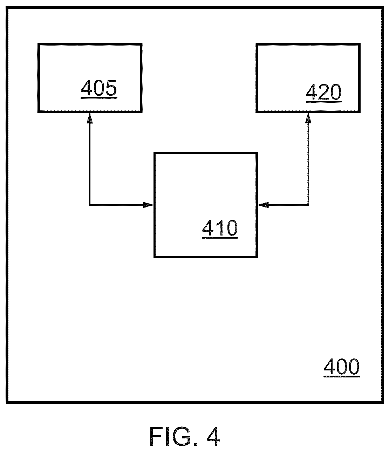

Figure 3 shows a system 300 according to embodiments of the disclosure. In the system 300, there is provided a video switcher 400 according to embodiments of the disclosure. The video switcher 400 may be a virtual switcher located on a network or may be a hardware device. This will be explained in more detail with reference to Figure 4. In the system 300 of Figure 3, a user interface 310 is provided. The user interface 310 may include a user input which may be a physical controller such as a mouse and/or keyboard, a jog shuttle, various physical or logical switches and dials and, in embodiments, the user interface 310 may include a microphone into which the user may speak various commands. In embodiments, of course, the microphone may be provided as an input directly into the video switcher 400. An output from the video switcher 400 is fed to a display 305. The display 305 allows the user of the video switcher 400 to monitor the output of the video switcher 400 to ensure it is correct. Finally, in embodiments, the video switcher 400 is connected to a server 315 which may be provided locally to the video switcher 400 over a network or may be provided remotely to the video switcher 400 over the internet or the like. In embodiments, the server 315 provides video content to the video switcher and may also provide the graphical element to be included in the key. Of course, the disclosure is not so limited and in embodiments, the video content and the key content may be provided as one or more live inputs to the video switcher 400 via the network or via another interface such as a Serial Digital Interface (SDI). Further, the server 315 may store any Artificial Intelligence models used by the video switcher 400 to implement embodiments of the disclosure.

Figure 4 shows a video switcher 400 according to embodiments of the disclosure. The video switcher 400 includes processing circuitry 410 that may be configured to be an Application Specific Integrated Circuit or is, in embodiments, solid-state circuitry configured to operate using computer readable instructions. The computer readable instructions may be embodied as a computer program and is stored in storage 405 within the video switcher 400. Storage 405 is in embodiments, solid state storage configured to store computer readable instructions. Of course, the storage 405 may be an optically or magnetically readable storage. Moreover, storage 405 may be used to store video content such as the background video content and/or the graphical element used to generate the key. The video switcher 400 includes, in embodiments, interface circuitry 420 that allows the video switcher 400 to communicate with the user interface 310 and the server 315. In particular, the interface circuitry 420, in embodiments, allows the video switcher 400 to communicate over a network (either a local network or the Internet) and to connect to the user interface 310 using a USB-C connection or the like. Of course, the disclosure is not so limited and the user interface 310 could be connected to the video switcher 400 via a local PC (not shown) which sends commands to the video switcher 400 over the network. The display could be connected to the local PC or the video switcher 400.

### Operation

The purpose of embodiments of the disclosure is to determine the position of the key on the input, where the position is determined according to a first parameter associated with the video stream. The key is then overlaid on the video stream at the determined position to generate an output video stream. By determining the position of the key based on this first parameter, the production of the output video stream is easier.

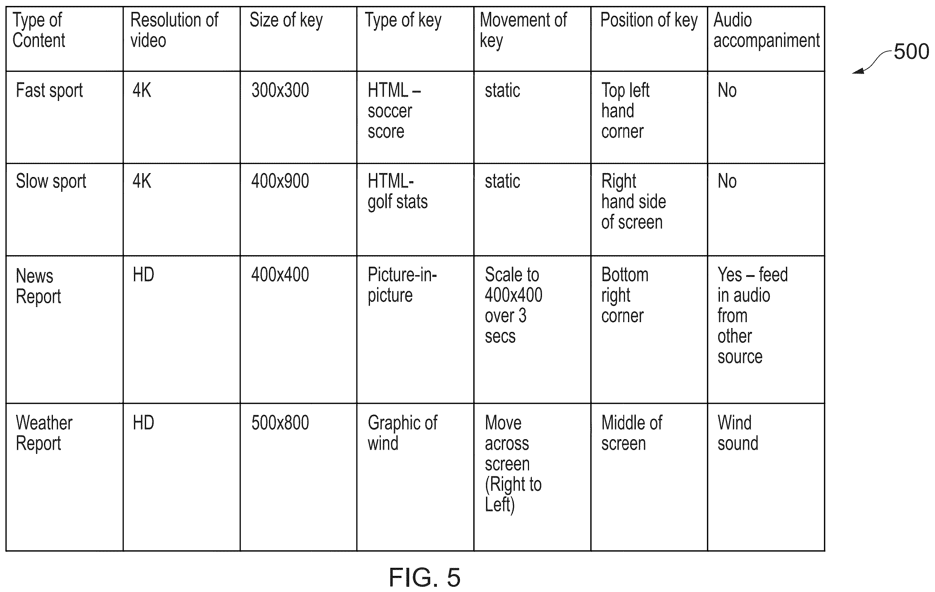

Figure 5 shows a table 500 explaining the relationship between a first parameter of the video stream and a position of the key. The position of the key on the video stream is a desired position based upon the first parameter of the video stream. As will be appreciated, only a small number of entries are shown in the table for ease of explanation. In reality, the table 500 will contain many more entries. A first parameter associated with the video stream, in the embodiments of table 500, will include the type of content of the video stream, the size of the key, the movement of the key or the like. The position of the key is shown in table 500 as a region on the video stream such as 'top left hand corner', 'right hand side of screen' or the like. Of course, the disclosure is not so limited and a pixel position on the video stream of a defined point on the key, such as the centre of the key or the top right hand pixel may be provided.

The relationship between the position of the key and the first parameter may be defined by a user in embodiments. In other words, an editor may define the position of the key when a particular first parameter is provided in the video stream. For example, a content provider may have a certain 'house style' such as for any fast sport, such as a soccer match, a HTML key showing a soccer score is located in the top left hand corner of the video stream and that this score must be 300x300 pixels in size. Of course, the disclosure is not so limited and any relationship between the position of the key and the first parameter is expected.

In embodiments, the relationship between the position of the key and the first parameter may be defined by Artificial Intelligence. In this instance, an Artificial Intelligence model will be trained by many instances of real-life video where keys have been overlaid onto an input video stream. In embodiments, the Artificial Intelligence model will be trained by 10,000 instances of real-life video for each of the parameters mentioned in the table of Figure 5. In other words, there are 10,000 instances of video where the type of content is fast sport, 10,000 instances where the size of key is 400x900 pixels and the like. The position of the key in each of those instances is then populated in the table 500. Accordingly, it is possible for the Artificial Intelligence model to be trained so that the relationship between the first parameter and the position of the key when a video under test is applied to the Artificial Intelligence model can be established. In other words, when a video under test is applied to the trained Artificial Intelligence model, the model determines the position of the key according to the first parameter which is associated with the video stream.

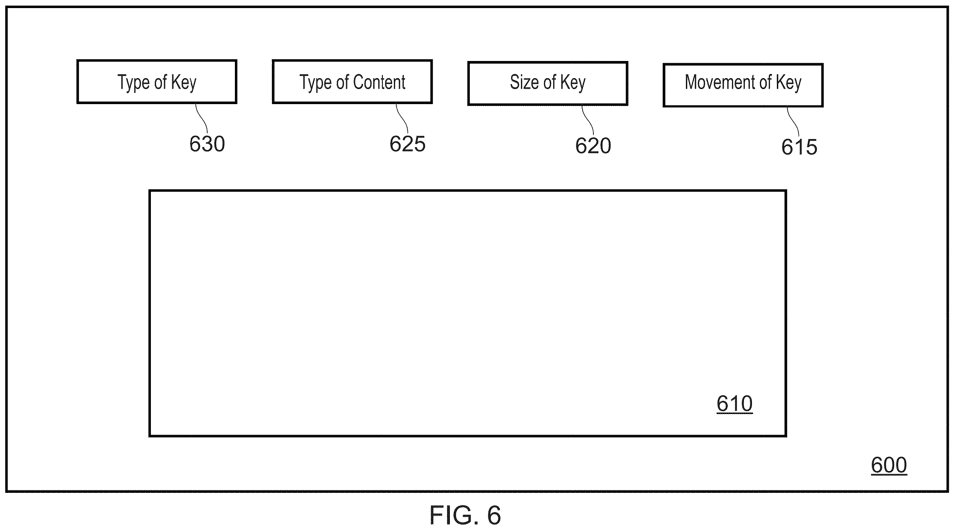

The operation of a video switcher 400 according to embodiments will be described with reference to Figures 6 to 9 and to Figure 5.

Referring to Figure 6, a user interface 600 is shown. In embodiments, the user interface 600 is provided on the display 305 for the user to view. Although the user interface 600 is shown, the disclosure is no way limited to this and, as explained later, in embodiments, the user interface may allow the user to speak commands. The user interface and/or voice commands of the user allows the processing circuitry to receive instruction from the user defining a feature of the key.

The user interface 600 shows a number of first parameters associated with the image stream. In particular, only a subset of the parameters noted in table 500 are shown on the user interface 600. Specifically, the 'type of key' 630, 'type of content' 625, 'size of key' 620 and 'movement of key' 615 is shown. A preview screen 610 shows a preview of the overlaid key on the video stream which is applied by the video switcher 400. In embodiments, the user confirms that such preview is acceptable using a spoken command or a button (not shown) on the user interface 600.

In embodiments, the parameter may be selected from a drop down list or as a free text entry. The purpose of the parameter, in embodiments, is that the user may select the parameter that is desired for the particular key and the video switcher 400 determines the position of the key on the video stream by referring to the table 500. So, for example, the user may select the 'Movement of the Key' maybe to move the key from right to left on the screen. In this instance, the video switcher 400 determines the position of key based upon the entry or entries in the table where the 'Movement of the Key' moves from right to left on the screen. Of course, the disclosure is not so limited. In embodiments, the type of content may be selected either by the user or by image recognition and the video switcher 400 may select one or more of the size of key, type of key, movement of key, position of the key and/or whether there is an audio accompaniment based upon the type of content. For example, for a weather report, a particular size or type of key may be particular popular or suitable. Therefore, the video switcher 400 may select, size and apply a suitable key to the video based upon the type of content.

In this instance, from Figure 5, the video switcher 400 positions the key in the middle of the screen.

Of course, in embodiments, the video switcher 400 may select other features of the key based upon the parameters. For example, the 'type of key' may be selected as a graphic or animation of wind and further, an audio accompaniment may be selected such as a wind sound.

The video switcher 400 overlays the key onto the video stream in the position determined by the table 500. In embodiments, the video with the overlaid key is then finalised and output. This means that the embodiments of the disclosure automatically generates the output video. However, the disclosure is not so limited.

In embodiments, the video switcher 400 automatically produces a proposed final video with overlaid key. In embodiments, the video with the key overlaid thereon is then displayed to the user on the preview screen 610. The user, in embodiments, is provided with the option to accept the preview or decline the preview depending on his or her choice. In the event that the user accepts the preview, the video with the overlaid key is then finalised and output. In other words, the graphical property is provided to the user and overlaid on the video stream in response to a user input. In embodiments, the graphical property is one of the movement of the key from a determined position over a period of time, the size of the key and animation of the key, the shape of the key, rotation of the key, the opacity of the key or the like.

Of course, although the user may accept or decline the preview, in embodiments, the video switcher 400 determines what key is most appropriate with a particular type of video stream. In this case, the video switcher 400 may improve future suggestions for preview or limit the future drop down menus to save screen real-estate.

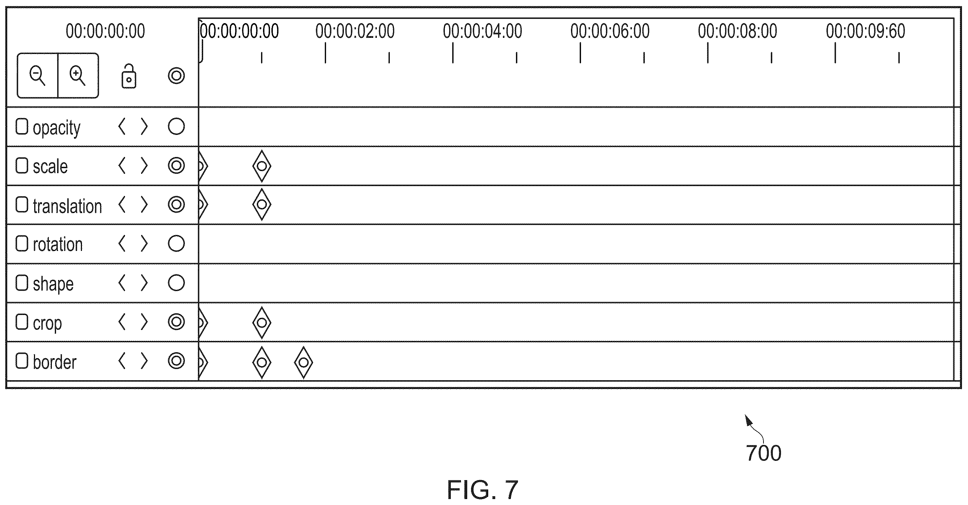

In the event that the user does not accept the preview, a second graphical user interface is displayed to the user as will be explained later with reference to Figure 7. The purpose of the second graphical user interface is to allow the user to slightly adjust the criteria for the key to meet their requirements. In other words, the video switcher 400 produces a near final video for output that is then adjusted by the user.

Referring to Figure 7, a second graphical user interface 700 is shown. In the second graphical user interface 700, various criteria which were applied to the key are shown in association with a timeline. These criteria are stored in table 500 in association with the various parameters of the video. In other words, the criteria shown in the second graphical user interface 700 are those criteria that determine the movement or manipulation of the key in order to achieve, for example, the movement of the key across the screen. In embodiments, these criteria include opacity of the key, scale of the key and any translation, rotation, shape, crop or border applied to the key, although of course, other criteria are envisaged.

As is evident from the second graphical user interface 700, various changes are applied to the key at various points of time. For example, the key is scaled and a translation is applied at 00:00:01:00. This is identified as a diamond shape icon. If the user touches the diamond shape icon, the actual value of the, for example, scale and or/translation is shown in an editable manner. The user is then able to adjust the value of the criteria. In embodiments, the user is able to visualise the changes made to the key overlaid on the video on the preview screen 610. This facilitates making an editing decision.

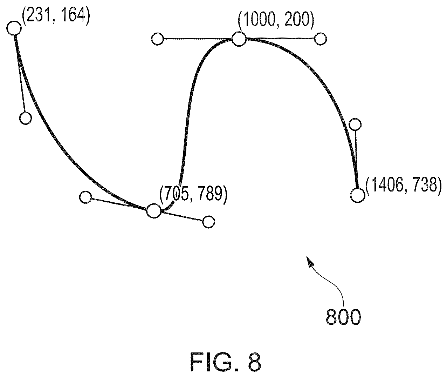

Figure 8 shows an example of the translation criterion 800 displayed to the user in the second user interface 700. In the event that the user selects the translation criterion, the movement path of the key across the screen is shown to the user. This is shown in the translation criterion 800 of Figure 8. The dots along the path show various time-points along the path that correspond to the points of time in the second graphical user interface 700. The dots along the path also display the screen co-ordinates where the key is on the output video. The user is able to drag each one of these points to a different location so that the position of the key at that particular point of time is changed. This may be achieved using a touchscreen or mouse or the like. The gradient of the path at the time point is shown with a straight line abutting the path at that time point. The gradient of the line may also be changed by the user which will change the direction of the path without altering the position of the key on the video.

Although the foregoing has described the use of a graphical user interface 600 in Figure 6 and a second graphical user interface 700 in Figure 7 to define and adjust the position of the key respectively, the disclosure is not so limited. It is possible that a user may use any kind of input to define the parameter. For example, the user may use a free text input or a voice command. In this instance, a Large Language Model will be used to interpret the user's free text or voice command into a parameter which is compared to the table of Figure 5. For example, instead of the parameters shown in boxes as in Figure 6, the user may say or type 'please move the key from right to left on the screen'. In this instance, the Large Language Model will interpret this as the movement of the key parameter which needs to be set to movement from right to left on the screen. This parameter is then compared to the table of Figure 5 as explained above. Further, the user may control and refine the position of the key as explained above with reference to Figure 7 and 8 using voice commands.

Other operations of the video switcher 400 will now be described.

In embodiments, one or more of the parameters set out in the table of Figure 5 may be used to suggest various adaptations to the key (such as its size, position or movement) after the user has created an initial overlaid video. For example, for a particular type of content, such as fast sport, the size of the key suggested by the user may be very large compared to the size stored in the table 500 of Figure 5. In this instance, the video switcher 400 may suggest to the user to reduce the size of the key. The user can approve or preview such a suggestion. In order to achieve this, the type of content is selected (either automatically using video recognition or by the user) and one or more of the parameters of the key created by the user are compared with those corresponding parameters in the table 500. In the event that the difference in parameter values is above a threshold value, the video switcher 400 suggests a change to the parameter value to be within the threshold value.

In this regard, in embodiments, other criteria may be stored in the table 400. For example, the specific types of movement of the key may be stored in association with the type of content. So, in the instance of a fast sport type video content, the movement of the key may be smoothed by using a Bezier curve or the speed of movement of the key may be limited to avoid an uncomfortable viewing experience for the user.

In embodiments, audio may be added to the video stream that includes the overlaid key. The audio accompaniment is provided in the table 500. The audio accompaniment may be selected from a set of stored audio clips or may be generated based upon at least one of a plurality of parameters of either one or more of the background video and/or the key. This audio may be generated using Artificial Intelligence such as using Mureka or the like. For example, a 'whoosh' sound may be generated for a key that moves to the end of the screen; the speed of the whoosh increasing as the key moves across the screen or a wobble sound is generated for a vibrating animation or a stretching sound for a key whose scale increases over time. In embodiments, the speed or frequency of the sound, or the speaker from which the sound emanates changes depending upon the change to the key. Of course, the disclosure is not so limited and a stored audio clip may be changed according to a parameter of the key. In other words, the audio clip may be a 'whoosh' and the speed of playback of the sound is changed depending upon the movement of the key. The audio is output with the generated output video stream.

In embodiments, the video switcher 400 is configured to analyse the input video stream for one or more feature of the video. The feature of the video may include movement of objects within the video stream, size of the objects in the video, speed of movement of the objects in the video, the location of objects of interest (such as people) within the input video stream or the like. The video switcher 400 uses the extracted features to determine the parameter of the key which is to be overlaid on the video. For example, the video switcher 400 is configured to avoid placing a key over a moving object in the video. This mean that the video switcher 400 changes the movement of the key across the video to avoid the moving object in the video stream. Similarly, the size of the key may be selected to avoid obscuring the moving object in the video stream. Further, the opacity of the key may be adjusted to avoid obscuring a moving object or a feature of interest. In embodiments, the video switcher 400 is configured to start display of the key when there is no movement in the input video stream to avoid obscuring the moving objects.

Moreover, the time period the key is overlaid on the video for may be determined by the features of the video stream. In embodiments, the key may be overlaid on the video whilst a certain object is being shown. For example, a key identifying the person whilst a particular person is shown on the video (i.e. the identity of the person is the feature of the video stream).

In embodiments, the video switcher 400 recognises a video stream from a particular broadcaster or from a particular region of the world. In this instance, the feature of the video may include the broadcaster of the video stream or the region of the world. In embodiments, the video switcher 400 is configured to select a parameter of the key based upon the particular region or broadcaster. For example, a particular broadcaster may have a particular format of key which is included in its broadcasts. For example, a particular graphic may be inserted in a corner of video streams. In embodiments, this may be associated with the type of content. For example, the graphic may be specific to a particular type of content such as a sport and the position of the key may also vary depending on the type of content for example, for sport, the key is located in a top corner of the video.

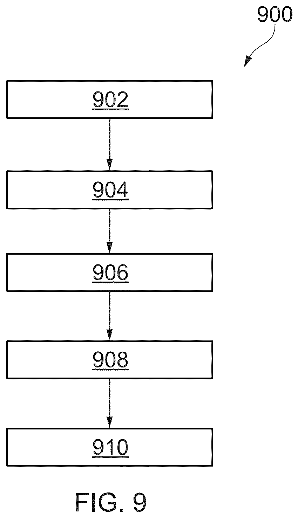

Figure 9 shows a process 900 explaining embodiments of the disclosure carried out on the processing circuitry 410. The process 900 starts in step 902 and then moves to step 904. In step 904, the processing circuitry 410 generates a key. This may be retrieved from storage or generated on the fly. The process moves to step 904 where the processing circuitry 410 determines the position of the key on the input video stream, the position being determined according to a first parameter associated with the video stream. The process then moves to step 906 where the process overlays the key on the video stream at the determined position to generate an output video stream. The process moves to step 908 where the processing circuitry outputs the generated output video stream. The process then ends in step 910.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

Embodiments of the present technique can be generally described by the following numbered clauses:
1. A video switcher comprising an input configured to receive a video stream and processing circuitry configured to:
   generate a key;
   determine the position of the key on the input video stream, the position being determined according to a first parameter associated with the video stream;
   overlay the key on the video stream at the determined position to generate an output video stream; and
   output the generated output video stream.
2. A video switcher according to clause 1, wherein the processing circuitry is configured to: receive instruction from a user defining a feature of the key.
3. A video switcher according to clause 2, wherein the processing circuitry is configured to: receive the instruction via an audio input.
4. A video switcher according to any preceding clause, wherein a graphical property is one of the movement of the key from the determined position over a period of time, the size of the key and animation of the key, opacity of the key, shape of the key and/or rotation of the key.
5. A video switcher according to clause 4, wherein the processing circuitry is configured to: provide the determined graphical property of the key to a user and overlay the key in response to a user input.
6. A video switcher according to any preceding clause, wherein the processing circuitry is configured to: obtain an audio stream associated with the key; and output the obtained audio with the generated output video stream.
7. A method performed on a video switcher, the video switcher comprising an input configured to receive a video stream and the method comprising:
   generating a key;
   determining the position of the key on the input video stream, the position being determined according to a first parameter associated with the video stream;
   overlaying the key on the video stream at the determined position to generate an output video stream; and
   outputting the generated output video stream.
8. A method according to clause 7, comprising: receiving instruction from a user defining a feature of the key.
9. A video switcher according to clause 8, comprising: receiving the instruction via an audio input.
10. A method according to any one of clauses 7, 8 or 9, wherein a graphical property is one of the movement of the key from the determined position over a period of time, the size of the key and animation of the key, opacity of the key, shape of the key and/or rotation of the key.
11. A method according to clause 10, comprising: providing the determined graphical property of the key to a user and overlaying the key in response to a user input.
12. A method according to any one of clauses 7 to 11, comprising: obtaining an audio stream associated with the key; and outputting the obtained audio with the generated output video stream.
13. A computer program comprising computer readable instructions which, when loaded onto a computer, configures the computer to perform a method according to any one of clauses 7 to 12.

## Claims

1. A video switcher comprising an input configured to receive a video stream and processing circuitry configured to:
generate a key;
determine the position of the key on the input video stream, the position being determined according to a first parameter associated with the video stream;
overlay the key on the video stream at the determined position to generate an output video stream; and
output the generated output video stream.

2. A video switcher according to claim 1, wherein the processing circuitry is configured to: receive instruction from a user defining a feature of the key.

3. A video switcher according to claim 2, wherein the processing circuitry is configured to: receive the instruction via an audio input.

4. A video switcher according to claim 1, wherein a graphical property is one of the movement of the key from the determined position over a period of time, the size of the key and animation of the key, opacity of the key, shape of the key and/or rotation of the key.

5. A video switcher according to claim 4, wherein the processing circuitry is configured to: provide the determined graphical property of the key to a user and overlay the key in response to a user input.

6. A video switcher according to claim 1, wherein the processing circuitry is configured to: obtain an audio stream associated with the key; and output the obtained audio with the generated output video stream.

7. A method performed on a video switcher, the video switcher comprising an input configured to receive a video stream and the method comprising:
generating a key;
determining the position of the key on the input video stream, the position being determined according to a first parameter associated with the video stream;
overlaying the key on the video stream at the determined position to generate an output video stream; and
outputting the generated output video stream.

8. A method according to claim 7, comprising: receiving instruction from a user defining a feature of the key.

9. A video switcher according to claim 8, comprising: receiving the instruction via an audio input.

10. A method according to claim 7, wherein a graphical property is one of the movement of the key from the determined position over a period of time, the size of the key and animation of the key, opacity of the key, shape of the key and/or rotation of the key.

11. A method according to claim 10, comprising: providing the determined graphical property of the key to a user and overlaying the key in response to a user input.

12. A method according to claim 7, comprising: obtaining an audio stream associated with the key; and outputting the obtained audio with the generated output video stream.

13. A computer program comprising computer readable instructions which, when loaded onto a computer, configures the computer to perform a method according to claim 7.
